# EUROPÄISCHE PATENTANMELDUNG

(11) **EP 1 792 556 A1**
(43) Veröffentlichungstag der Anmeldung: **06.06.2007**
(21) Anmeldenummer: 06024321.9
(22) Anmeldetag: 23.11.2006
(51) Int. Cl.: A47J 45/06

(54) **Griff für einen Kochgefäß-Deckel**

(30) Priorität: 30.11.2005 IT MI20050411 U
(71) Anmelder: BALLARINI PAOLO & FIGLI S.p.A., 46017 Rivarolo Mantovano (MN) (IT)
(72) Erfinder: Garziera, Roberto Vincenzo, 22070 Appiano Gentile (IT)
(74) Vertreter: Mayer, Hans Benno

(57) **Zusammenfassung**

Deckel (1) mit Griff (3,4) für ein Kochgefäß, wobei der Deckel an seiner Außenseite sowie in seiner Mitte eine Halterung (2) aufweist, die verschwenkbar plattenförmige Griffe (3,4) aufnimmt, die in ihrer Ruhelage der Oberfläche des Deckels (1) folgen und in Gebrauchslage geneigt nach oben von der Fläche des Deckels abstehen.

## Beschreibung

Die vorstehende Erfindung betrifft einen Deckel mit einem Griff für ein Kochgefäß.

Es ist aus dem Stand der Technik bekannt geworden, den Deckel für ein Kochgefäß mit einem abstehenden Griff auszurüsten, der in der Mitte des Deckels angeordnet ist.

Diese Anordnung hat sich als Nachteil erwiesen, da der vom Deckel abstehende Griff einen erheblichen Raumbedarf mit sich bringt, z.B. dann, wenn der Deckel in einer Geschirrspülmaschine anzuordnen ist oder im Schubfach eines Küchenmöbels abgelegt wird.

Es sind andere Deckel für Küchengefäße bekannt geworden, bei dem die Griffe seitlich vom Umfangsrand des Deckels abstehen.

Auch diese Ausführungsform hat einen erheblichen Platzbedarf, sowohl dann, wenn das Kochgefäß auf einer Wärmequelle angeordnet ist, als auch dann, wenn der Deckel in eine Geschirrspülmaschine einzusetzen oder in einem Schubfach abzulegen ist.

Es ist daher Aufgabe der vorstehenden Erfindung, die Nachteile des Standes der Technik zu vermeiden und einen Deckel für ein Kochgefäß vorzuschlagen, dem abstehende Griffe fehlen, sobald der Deckel nicht mehr Verwendung findet.

Diese Aufgabe wird erfindungsgemäß durch einen Deckel gelöst, der an seiner Außenseite und in seiner Mitte eine Aufnahme trägt, die in schwenkbarer Weise plattenförmig ausgebildete Griffe aufweist, welche in Ruhelage der Oberfläche des Deckels folgen und in Gebrauchslage von der Oberfläche des Deckels geneigt nach oben abstehen.

Mit besonderem Vorteil weist jeder Griff eine gewölbte Oberfläche auf, die konkav ausgeführt ist und in Ruhelage des Deckels im wesentlichen parallel zur Deckeloberfläche ausgerichtet ist.

Weitere Vorteile der Erfindung können der nun folgenden Beschreibung, den Unteransprüchen und den beigefügten Zeichnungen entnommen werden.

Der Erfindungsgegenstand wird nun genauer beschrieben und in den beigefügten Zeichnungen dargestellt.

### Es zeigen:

Figur 1 den Deckel in perspektivischer Ansicht von oben, mit den Griffen in Ruhelage.

Figur 2 den Deckel in perspektivischer Ansicht von oben, mit den Griffen in Gebrauchslage.

Figur 3 im Schnitt den Deckel sowie die Griffe in Gebrauchslage.

Figur 4 im Schnitt den Deckel mit den Griffen sowie der Aufnahme für diese Griffe.

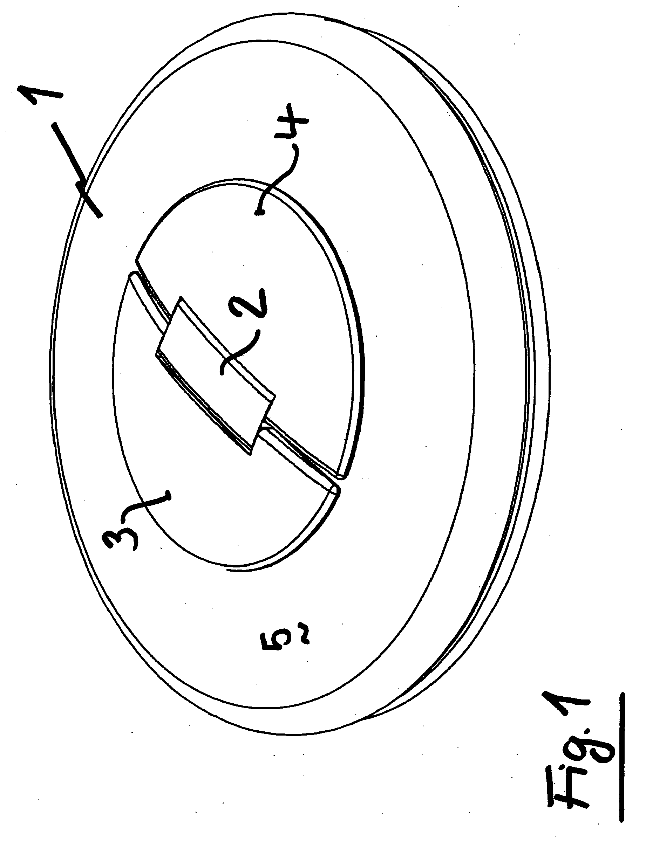

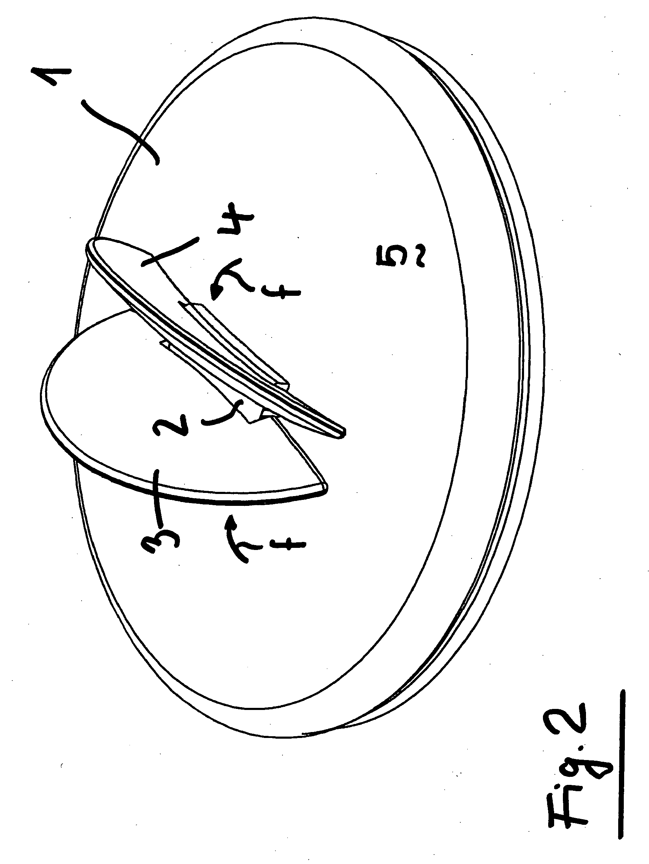

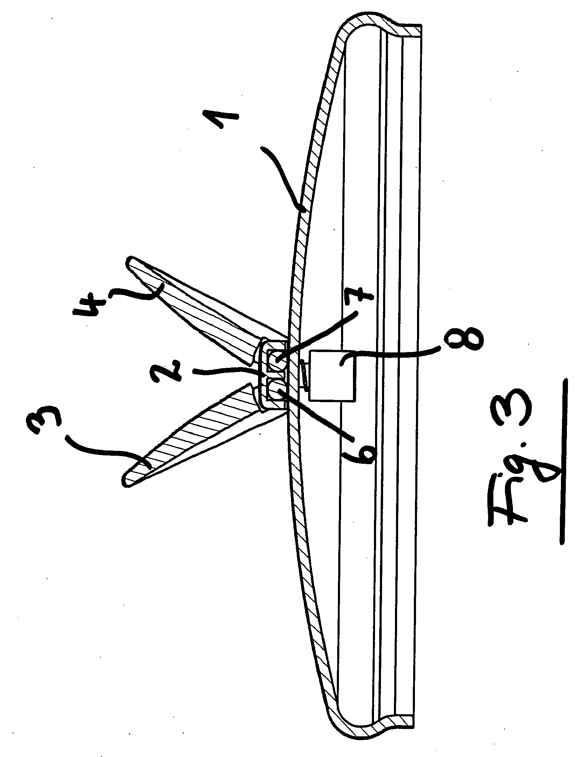

Wie der Figur 1 zu entnehmen ist, weist der Deckel 1, der runde, quadratische, rechteckige oder ovale Form einnehmen kann, in der Mitte eine Halterung 2 auf, die verhältnismäßig flach ausgeführt ist.

Mit der Halterung 2 sind Gelenkegriffe 3 und 4 verbunden.

In der Zeichnung ist jeder Griff 3, 4 durch eine halbkreisförmige Platte gebildet.

Es ist naheliegend, dass die Griffe 3 und 4 auch andere geometrische Form aufweisen können.

Wie der Figur 1 zu entnehmen ist, liegen die beiden Griffe 3, 4 in Ruhelage an der Oberfläche des Deckels 1 an. Dadurch nehmen diese Griffe in der Praxis keinen wertvollen Raum über der Ebene 5 des Deckels in Anspruch. Folglich belegen die Griffe in Axialrichtung oder in Vertikalrichtung einen Raum, der nur wenig über der Dicke des Deckels liegt.

In Figur 2 ist der Deckel 1 mit Griffen 3 und 4 nach einer Schwenkbewegung um Stifte oder Wellen dargestellt, die in der Halterung 2 angeordnet sind.

Die Vorrichtung, die im anschließenden noch genauer beschrieben werden wird, ist derartig ausgebildet, dass es möglich wird, die Griffe 3 und 4 in geneigter Anordnung gegenüber einer vertikalen Ebene (siehe Pfeil f) anzuordnen.

Der in Figur 3 dargestellen Schnittdarstellung kann der Deckel 1 im Schnitt entnommen werden.

In der Mitte des Deckels ist eine Halterung 2 montiert, welche z.B. die Form eines Parallelepides annimmt, die Halterung 2 übernimmt verschwenkbar, unter Zuhilfenahme von zwei Stiften 6 und 7, die Griffe 3 und 4, die die neue vorgeschlagene Griffanordnung bilden.

Die Aufnahme 2 ist mit einer Vorrichtung 8 wirkverbunden, die im Inneren des Deckels 1 befestigt ist und im Nachgang genauer beschrieben werden wird.

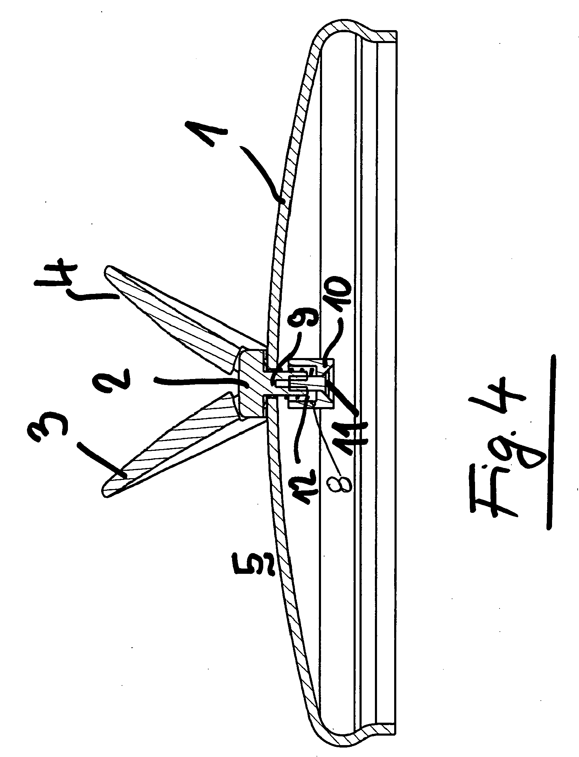

Wie der Figur 4 zu entnehmen ist, sind die beiden Griffe 3 und 4 des Deckels 1 über Querstifte (siehe Figur 3) an der Halterung 2 angeordnet.

Die Halterung 2 weist eine Verlängerung 9 auf, die die Wand des Deckels 1 durchdringt. Diese Verlängerung 9 dringt in eine Ausnehmung eines schüsselartigen Bauteiles 10 ein, das an der Verlängerung 9 über eine Schraube 11 befestigt ist.

Zwischen der Innenseite des Deckels 1 und dem Boden des schüsselartigen Gebildes 10 ist ein elastisch ausgebildetes Bauteil vorgesehen, z.B. eine Feder 12 oder ein elastischer Körper, z.B. aus Silikon, der die Tendenz hat, die Aufnahme 2 permanent auf die Fläche 5 des Körpers 1 zu verschieben.

Die Feder 12 ist derartig dimensioniert, dass das Bestreben besteht, die Griffe 3 und 4 in ihrer Ruhelage zu halten, in welcher die Griffe mit dem Verlauf der Oberfläche 5 des Deckels 1 übereinstimmen (siehe Figur 1).

Um die Griffe 3 und 4 in ihre Gebrauchslage zu bringen, wie dies in Figur 2 dargestellt ist, werden die Griffe nach oben um die Stifte 6 und 7 und gegen die Wirkung der Feder 12 nach oben verschwenkt.

## Patentansprüche

1. Deckel mit Griff für ein Kochgefäß, **dadurch gekennzeichnet, dass** der Deckel (1) an seiner Außenseite und in seiner Mitte eine Aufnahme (2) aufweist, die verschwenkbar plattenförmige Griffe (3, 4) aufnimmt, welche in ihrer Ruhelage (Figur 1) der Oberfläche (5) des Deckels (1) folgen und in Gebrauchslage (Figur 2) mit geneigter Erstreckung von der Fläche des Deckels nach oben abstehen.

2. Deckel, nach Patentanspruch 1 **dadurch gekennzeichnet, dass** die plattenförmigen Bauteile (3, 4) halbkreisförmig ausgebildet sind.

3. Deckel, nach Patentanspruch 1, **dadurch gekennzeichnet, dass** die plattenförmigen Bauteile (3, 4) verschwenkbar mit der Aufnahme (2) verbunden sind, die fest am Deckel angeordnet ist, wobei für die Verbindung kleine Stifte (6, 7) Verwendung finden.

4. Deckel, nach Patentanspruch 1, **dadurch gekennzeichnet, dass** der Aufnahmekörper (2) mit einer Vorrichtung (8) wirkverbunden ist, der im Inneren des Deckels (1) angeordnet ist.

5. Deckel, nach Patentanspruch 1, **dadurch gekennzeichnet, dass** die Aufnahme (2) eine Verlängerung (9) aufweist, welche die Wand des Deckels (1) durchdringt und dass diese Verlängerung (9) in die Ausnehmung eines schüsselartigen Bauteiles (10) eindringt, die an der Verlängerung (9) mittels einer Schraube (11) befestigt ist.

6. Deckel, nach Patentanspruch 1, **dadurch gekennzeichnet, dass** zwischen der Innenseite des Deckels (1) und dem Boden des Bauteiles (10) ein Federmittel (12) angeordnet ist, welches die Aufnahme (2) andauernd in Richtung der Fläche (5) des Deckels (1) beaufschlagt.

7. Deckel, nach Patentanspruch 1, **dadurch gekennzeichnet, dass** das Federmittel (12) derartige Abmessungen aufweist, um die Griffe (3, 4) in Ruhestellung, der Fläche (5) des Deckels folgend, zu halten und im Falle der angehobenen Griffe (3, 4) in Gebrauchslage durch die Feder (12) ein Halten der Griffe (3, 4) in geneigter, nach oben gerichteter Stellung erfolgt.

8. Deckel, nach Patentanspruch 1, **dadurch gekennzeichnet, dass** die Aufnahme (2) derartig ausgebildet ist, dass ein Festlegen der Griffe in einer vorbestimmten geneigten Lage erfolgt.
